# EUROPÄISCHE PATENTSCHRIFT

(11) **EP 2 164 671 B1**
(45) Veröffentlichungstag und Bekanntmachung des Hinweises auf die Patenterteilung: **12.08.2015**
(21) Anmeldenummer: 08759083.2
(22) Anmeldetag: 06.06.2008
(51) Int. Cl.: B23K 20/12

(54) **REIBSCHWEISSVERBINDUNG VON MEHREREN AUFEINANDERLIEGENDEN PLATTEN**
FRICTION WELD ASSEMBLY OF A PLURALITY OF PLATES ARRANGED ONE ABOVE THE OTHER
ASSEMBLAGE PAR SOUDAGE PAR FRICTION DE PLUSIEURS PLAQUES SUPERPOSÉES

(30) Priorität: 03.07.2007 DE 102007030806
(43) Veröffentlichungstag der Anmeldung: 24.03.2010
(73) Patentinhaber: EJOT GmbH & Co. KG, 57334 Bad Laasphe (DE)
(72) Erfinder: CHRIST, Eberhard, 99897 Tambach-Dietharz (DE)
(74) Vertreter: Puschmann Borchert Bardehle Patentanwälte Partnerschaft mbB
(86) Internationale Anmeldenummer: PCT/EP2008/004546
(87) Internationale Veröffentlichungsnummer: WO 2009/003569

(56) Entgegenhaltungen:
- WO-A1-2006/061203
- DE-A- 19 927 103
- JP-A- 2004 106 046
- US-A1- 2005 172 469

## Beschreibung

Die Erfindung bezieht sich auf eine Reibschweißverbindung von mehreren aufeinanderliegenden Platten gemäß dem Oberbegriff vom Anspruch 1. WO 2006/06123 A1 beschreibt eine solche Reibschweißverbindung.

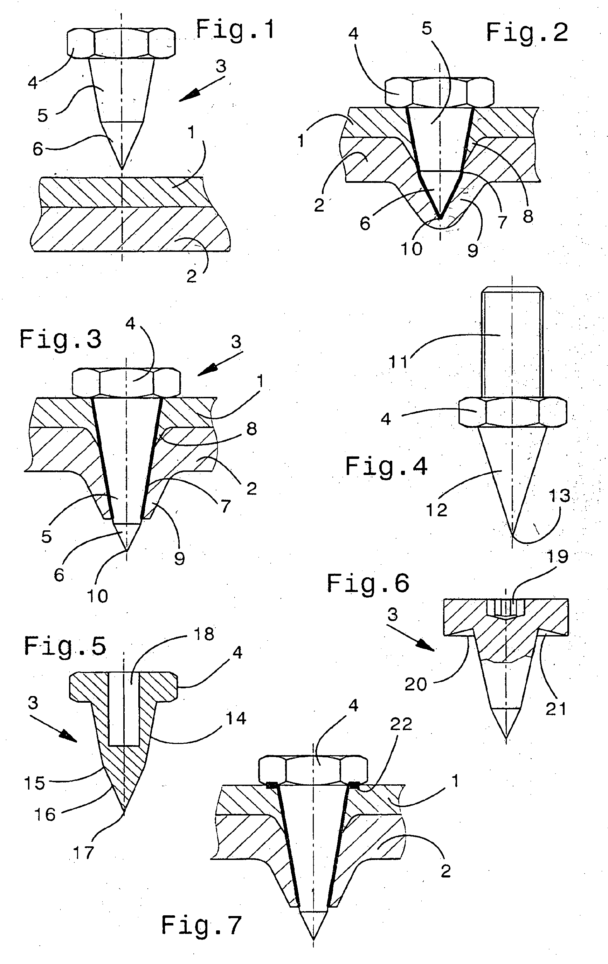

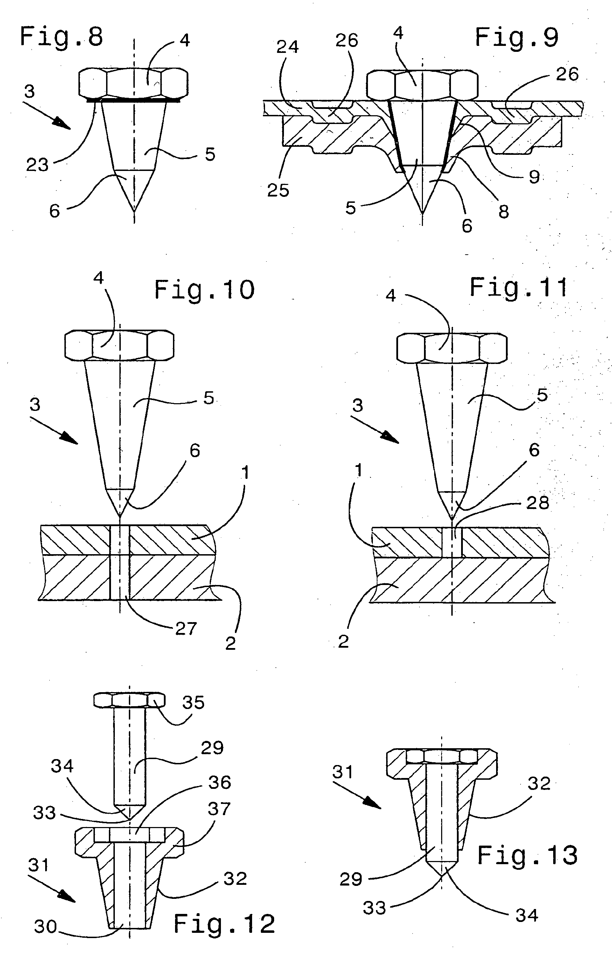

Eine derartige Reibschweißverbindung ist auch aus der WO-Schrift WO 02/062518 A1 bekannt. In deren Figur 7c ist ein für eine solche Reibschweißverbindung vorgesehener Verbindungskörper dargestellt, der einerseits einen Bund zum Anliegen an einer oberen Platte aufweist und andererseits im Wesentlichen aus einem schlanken Konus besteht, der in Richtung von dem Bund weg eine flache Spitze bildet, die durch eine entsprechend stumpfwinkligen kurzen Konus im Anschluss an den schlanken Konus geformt ist. Dieser Verbindungskörper dient dazu, unter Rotation in zwei aufeinanderliegende Platten eingedrückt zu werden, bis der Bund auf der oberen Platte aufliegt. Aufgrund der Rotation des Verbindungskörpers und die hierdurch entstehende Reibung zwischen dem Verbindungskörper und den beiden Platten wird das Material der gegeneinander reibenden Teile plastifiziert, so dass daraus eine Reibschweißzone entsteht, von der aus Material aus der Reibschweißzone über den Randbereich auf der Oberseite der oberen Platte austritt. Weitere Verbindungskörper sind in den Figuren 9a bis d dargestellt, die im Bereich ihres Bundes Mitnehmer für den Ansatz eines Druck- und Rotationswerkzeuges aufweisen, wobei ein Sechskant und ein Schlitz dargestellt sind.

Der Erfindung liegt die Aufgabe zugrunde, die eingangs erwähnte Reibschweißverbindung durch eine besondere Gestaltung mit besonders hoher Festigkeit zu schaffen. Erfindungsgemäß geschieht dies dadurch, dass ein von dem schlanken Konus bei dessen Rotation ausgeformter, aus der oberen Platte in die untere Platte eindringender Durchzug und ein aus der unteren Platte herausragender Durchzug längs ihrer Innenflächen eine sich auf den schlanken Konus erstreckende Reibschweißzone bildet, wobei die Spitze des schlanken Konus aus der unteren Platte herausragt und der Bund auf der oberen Platte aufsitzt.

Die Erfindung macht sich eine besondere Gestaltung der Reibschweißzone zunutze, nämlich die sich beim Reibschweißen bei ausreichendem Druck und hoher Reibung ausbildenden Durchzüge, die die Verbindung zwischen den aufeinanderliegenden Platten nicht nur über den Verbindungskörper, sondern auch über das beim Reibschweißvorgang herausgedrückte Material der Platten herbeiführen. Dabei wird insbesondere der aus der oberen Platte ausgeformte Durchzug, der in die untere Platte einbringt, ausgenutzt, der mit seiner Reibschweißzone die beiden aufeinanderliegenden Platten innig verbindet und somit die Kräfte, die die beiden zusammen halten, vor allem dem beim Reibschweißen herausgedrückten Material der Platten überträgt, die dazu in ausreichender Menge Reibschweißmaterial zur Verfügung stellen. Der von dem schlanken Konus auf der oberen Platte ausgeformte Durchzug ragt in das Material des unteren Platte hinein, wobei der Durchzug wie eine Hülse aus dem Material sowohl des Verbindungskörpers als auch der Platten eine durchgehende Reibschweißzone bildet, das die beiden Platten sicher miteinander verbindet.

Zweckmäßig gestaltet man den schlanken Konus so, dass seine Spitze von einem gegenüber dem schlanken Konus, der sich über die wesentliche Länge des schlanken Konus erstreckt, steileren kurzen Konus gebildet ist. Aufgrund dieser Gestaltung lässt sich Verbindungskörper unter entsprechendem axialen Druck und bei Rotation ohne Schwierigkeiten in die beiden aufeinanderliegenden Platten eindrücken, wobei er aufgrund seiner Reibung an seinem Umfang das Material der Platten aufschmilzt und damit als Konus mit entsprechender Kraftkomponente . das aufgeschmolzene Material der Platten in axialer Richtung vor sich herschiebt, wobei aufgrund seiner Form der Verbindungskörper ohne Schwierigkeiten die beiden aufeinanderliegenden Platten durchdringt und die Platten im Bereich ihrer Berührung mit dem Verbindungskörper schnell zum Erschmelzen bringt, womit über den sich dabei ergebenden Durchzug aus der oberen Platte, das in die untere Platte gewissermaßen hineinwandert, eine innige Verbindung zwischen den beiden Platten entsteht.

Bei der Gestaltung der Reibschweißverbindung kann man diese so weit ausbilden, dass die Spitze aus der unteren Platte herausragt.

Vorteilhaft kann die Spitze zusätzlich gehärtet werden. Eine besonders harte Spitze lässt sich aber auch dadurch erzielen, dass man die Spitze mit einem gegenüber dem schlanken Konusmaterial härteren Material überzieht. Bei einer derart behandelten Spitze wird das Eindringen in die Platten erleichtert.

Es ist auch möglich, eine harte Spitze als Ergänzungsstück an dem Metallstück anzubringen, z.B. durch Anschweißen.

Der den Verbindungskörper bildende schlanke Konus kann über seine Wirkung, als Verbindungskörper zu wirken, darüber hinaus weitere Funktionen erfüllen, nämlich als Bolzen oder als Mutter, wozu der schlanke Konus ein Sackloch aufweist. Um das beim Reibschweißen in Richtung auf den Bund abfließende plastifizierte Material, insbesondere der oberen Platte, aufzunehmen, gibt man zweckmäßig dem Bund auf seiner der oberen Platte zugewandten Seite eine Hohlkehle.

Die Reibschweißzone kann man über den Bereich der Durchzüge bis in die dem oberen Metallteil zugewandte Seite des Bundes erstrecken, womit der Reibschweißzone eine besonders hohe Festigkeit gegeben wird.

Eine besonders intensive Verbindung zwischen den Verbindungskörpern und der oberen Platte kann man dadurch herbeiführen, dass der Bund auf seiner der oberen Platte zugewandten Seite mit Heißklebstoff beschichtet ist. Der Heißklebstoff wird beim Entstehen der Reibschweißverbindung mit erhitzt und damit verflüssigt und stellt dann beim Abkühlen eine zusätzliche Verbindung zwischen dem Bund und der Platte her, wobei diese Verbindung außerdem einen Korrosionsschutz bildet.

Häufig ist es nötig, insbesondere eine besonders dünne Platte zu verstärken. In diesem Falle lässt sich die Reibschweißverbindung günstig einsetzen, indem nämlich die eine Platte als Verstärkung der anderen Platte ausgebildet ist. Beide Platten sind dann durch die Reibschweißverbindung fest miteinander verbunden, womit der sich über die Verstärkung hinaus erstreckenden Platte die notwendige Festigkeit der Verbindung gegeben wird, wobei beide Platten für das Reibschweißen gegeneinander arretiert werden.

Um dem schlanken Konus bei seinem Aufsetzen und Eindrehen in die beiden Platten von vorneherein eine Führung zu geben, kann man mindestens eines der beiden Platten mit einem Loch versehen. Insbesondere handelt es sich dabei um die obere Platte, das mit einem Loch die Spitze des schlanken Konus aufnimmt, wobei aber natürlich das bzw. die Löcher so eng sein müssen, dass durch den schlanken Konus aus der Wandung der Löcher immer noch genügend Material für das Reibschweißen und das Bilden der Durchzüge zur Verfügung steht. Außerdem ergibt sich damit ein schnelleres Durchdringen der beiden Platten.

Als Material für eine besonders harte Spitze des Verbindungskörpers lässt sich zweckmäßig auch dadurch herstellen, dass dem Verbindungskörper ein Mitnehmerstift gegeben wird, der die Spitze des Verbindungskörpers bildet. In diesem Falle liegt also eine zweiteilige Ausbildung des Verbindungskörpers vor.

Als Material für die Platten und den Verbindungskörper kann man in erster Linie Metall verwenden, es ist aber auch möglich, die Platten und den Verbindungskörper aus Kunststoff oder einer Materialkombination zu gestalten.

In den Figuren sind Ausführungsbeispiele der Erfindung dargestellt. Es zeigen:
- Figur 1: zwei aufeinanderliegende Platten und darüber der Verbindungskörper vor seinem Absenken auf die Platten;
- Figur 2: den in die beiden Platten eingedrehten Verbindungskörper unter Ausbildung einer Reibschweißzone und Durchzügen an den beiden Platten, wobei der Verbindungskörper vollständig von dem Material der unteren Platte umhüllt ist;
- Figur 3: eine ähnliche Gestaltung wie dargestellt in Figur 2, jedoch mit aus der unteren Platte heraustretender Spitze des Verbindungskörpers;
- Figur 4: einen Verbindungskörper mit Gewindebolzen;
- Figur 5: einen mit einem koaxialen Sackloch versehenen Verbindungskörper;
- Figur 6: einen Verbindungskörper mit einer Ausnehmung am unteren Rand seines Bundes;
- Figur 7: einen in zwei Platten eingedrehten Verbindungskörper unter Ausbildung einer bis unter den Bund des Verbindungskörpers reichenden Reibschweißzone;
- Figur 8: einen Verbindungskörper mit einer Schicht aus Heißkleber am unteren Rand seines Bundes;
- Figur 9: einen Verbindungskörper mit zwei Platten, von denen eine eine Verstärkung bildet;
- Figur 10: einen Verbindungskörper mit vorgelochten Platten;
- Figur 11: einen Verbindungskörper mit Platten, von denen nur das obere vorgelocht ist;
- Figuren 12 und 13: einen aus zwei Teilen zusammensetzbaren Verbindungskörper.

In der Figur 1 sind zwei aufeinanderliegende Platten 1 und 2 sowie der Verbindungskörper 3 dargestellt, der einen als Sechskant ausgebildeten Bund 4, einen die größere Länge des Verbindungskörpers 3 im Wesentlichen ausmachenden schlanken Konus 5 und einen sich an diesen anschließenden steileren kurzen Konus 6 aufweist. Der Verbindungskörper 3 und die beiden Platten 1 und 2 sind in einer Lage dargestellt, in der sie sich vor dem Beginn der Herstellung einer Reibschweißverbindung befinden.

Die sich aus den in Figur 1 dargestellten Bauteilen ausbildende Reibschweißverbindung ist in der Figur 2 dargestellt. Durch Rotation und Eindrücken des Verbindungskörpers 3 dringt dieser in die Platten 1 und 2 ein, wobei er die Platte 2 nicht vollständig durchdringt. Bei dem Vorgang des Reibschweißens des Verbindungskörpers 3 durch das Eindringen des kurzen Konus 6 und des schlanken Konus 5 in das Material der beiden Platten 1 und 2 ergibt sich aufgrund der Rotation des Verbindungskörpers eine so hohe Reibung gegenüber dem Material der Platten 1 und 2, dass sich entlang des schlanken Konus 5 und des steileren Konus 6 eine Reibschweißzone ausbildet, die durch die fette Linienführung 7 dargestellt ist. Dabei werden sowohl aus der Platte 1 als auch aus der Platte 2 jeweils ein Durchzug 8 und ein Durchzug 9 aus den Platten 1 und 2 herausgedrückt, wobei sich der Durchzug 8 teilweise in den Bereich des Materials der Platte 2 erstreckt und der Durchzug 9 einen Überzug über den kurzen Konus 6 und die Spitze 10 bildet.

Aufgrund dieser Gestaltung ergibt sich eine feste Verbindung zwischen den Platten 1 und 2, die sich über die Reibschweißzone 7 erstreckt und die erheblichen Abreißkräften ausgesetzt werden kann, ohne dass sie sich aus dem Verbund mit den beiden Platten 1 und 2 lösen kann.

Zu Figur 3 ist eine Variante zu der Darstellung in Figur 2 gezeigt, bei der der schlanke Konus so lang ausgebildet ist, dass die Spitze 10 des Verbindungskörpers die Platte 2 insgesamt durchsetzt und mit dem Bereich des kurzen Konus und der Spitze 10 die untere Platte völlig durchdringt und aus dieser herausragt. Die Reibschweißzone ist in Figur 3 wieder mit dem Bezugszeichen 7 versehen. Die in den Figuren 1 bis 3 dargestellten Verbindungskörper besitzen an ihrem oberen Rand jeweils einen Bund, der hier als Sechskant ausgebildet ist. Die betreffenden Verbindungskörper können also leicht durch ein entsprechendes schnell laufendes Drehwerkzeug eingesetzt werden, mit dem dann der Verbindungskörper in die notwendige Rotation versetzt werden kann, mit der die Reibschweißzone 7 erzeugt wird.

Der Verbindungskörper gemäß Figur 4 weist noch eine weitere Besonderheit auf. Sein schlanker Konus 12 läuft gleichmäßig unter einem gleichbleibenden Konuswinkel bis in die Spitze 13 aus, die Reibschweißzone dieses Verbindungskörpers erstreckt sich dann durchgehend gleichmäßig von dem Bund 4 ab bis zur Spitze 13. An dem Bolzen 11 mit seinem Gewinde kann dann irgendein weiteres Bauteil befestigt werden.

Welche Gestaltung des Verbindungskörpers, nämlich mit steilerem kurzen Konus oder durchgehend schlanken Konus, für den jeweiligen Anwendungsfall gewählt wird, hängt von den Materialien ab, in die der Verbindungskörper einzudrehen ist.

In der Figur 5 ist ein Verbindungskörper dargestellt, der demjenigen gemäß den Figuren 1 und 2 ähnlich ist. Jedoch ist der Konus des Verbindungskörpers 4 anders geformt als dies in den Figuren 1 und 2 dargestellt ist, da nämlich sich an den schlanken Konus 14 mit einem abgerundeten Übergang 15 ein steilerer Endkonus 16 anschließt, der schließlich in der Spitze 17 endet. Der Verbindungskörper 3 gemäß Figur 5 besitzt weiterhin das Sackloch 18, das z.B. mit einem Innengewinde versehen werden kann, um später einen Bolzen in den Verbindungskörper 3 einzudrehen.

In der Figur 6 ist ein Verbindungskörper 3 dargestellt, der dem Verbindungskörper 3 gemäß den Figuren 1 bis 3 weitgehend entspricht, allerdings besitzt er zum Zwecke der Mitnahme für die Drehung einen Innenantrieb 19, in den irgendein Werkzeug mit entsprechendem Außenangriff eingesetzt werden kann. Außerdem weist der Verbindungskörper 3 auf der Unterseite seines Bundes 20 eine Hohlkehle 21 auf, die dazu dient, beim Eintreiben des Verbindungskörpers in die beiden aufeinanderliegenden Platten 1 und 2 aufsteigendes Material aufzunehmen und gegebenenfalls damit zu verschweißen.

In der Figur 7 ist ein Verbindungskörper dargestellt, der weitgehend demjenigen gemäß Figur 3 entspricht. Allerdings ist der Verbindungskörper so weit in die beiden Platten 1 und 2 eingedreht, dass sich auch an der Unterseite des Bundes 4 eine Reibschweißzone einstellt, die durchgehend mit der Reibschweißzone entlang des schlanken Konus verbunden ist. Die Reibschweißzone 22 unterhalb des Bundes 4 wird gegebenenfalls durch ein besonders starkes Eindrücken des Verbindungskörpers in die Platten 1 und 2 herbeigeführt, womit nach Erkalten der Reibschweißzone sich eine besonders feste Verbindung zwischen Verbindungskörper und den Platten 1 und 2 ergibt.

In der Figur 8 ist ein Verbindungskörper ähnlich demjenigen gemäß Figur 1 dargestellt, der allerdings an seinem Bund auf der Unterseite mit einem Heißkleber 23 beschichtet ist. Beim Aufsetzen des Bundes 4 des Verbindungskörpers 3 auf einer oberen Platte ergibt sich eine Reibung zwischen Heißkleber 23 und der Oberfläche der betreffenden Platte, wobei der Heißkleber verflüssigt wird und schließlich nach Ausbildung der Reibschweißzone und danach folgender Beendigung des Antriebs des Verbindungskörpers sich gegen eine obere Platte presst und mit dieser bei erkaltendem Heißkleber 23 schließlich auch in diesem Bereich eine ähnliche Verbindung herbeiführt, die insbesondere zur Abdichtung und als Korrosionsschutz ausgenutzt werden kann.

Die erfindungsgemäße Reibschweißverbindung kann auch dazu benutzt werden, eine relativ dünne Platte aus Gründen einer erwünschten Verstärkung entsprechend zu behandeln. Dies ist in der Figur 9 dargestellt. Hier ist unter der Platten 24 die wesentlich dickere Stützplatte 25 vorgesehen, die zur Verstärkung der dünnen Platte 24 dient. Mit der Verstärkungsplatte 25 erhält der betreffende Bereich der Platte 24 eine besonders hohe Steifigkeit. Dabei wird durch die Einprägungen 26 und die entsprechenden Aufnahmen in der Stützplatte 25 der Gesamtkonstruktion eine besonders hohe Festigkeit gegeben. Dabei sind, wie bei den Ausführungsbeispielen gemäß Figur 2 und 3, die Durchzüge 8 und 9 ausgebildet.

In den Figuren 10 und 11 ist ein Verbindungskörper ähnlich demjenigen gemäß Figur 3 dargestellt, der hier in vorgelochte Bleche 1 und 2 eingesetzt werden könnte. Bei der Figur 10 handelt es sich um ein die beiden Platten 1 und 2 durchsetzendes Durchgangsloch 27, während bei der anderen gemäß Figur 11 nur die obere Platte 1 mit einem Durchgangsloch 28 versehen ist. In beiden Fällen ergibt sich wie bei der Anordnung gemäß Figur 3 die Ausbildung von Durchzügen und einer oberflächlichen Reibschweißzone, über die die beiden Platten 1 und 2 fest miteinander verbunden werden, wobei lediglich der Durchbruch 27 bzw. 28 für ein schnelleres Eindrehen des Verbindungskörpers in die Platten sorgt, was besonders bei sehr festen Werkstoffen vorteilhaft sein kann.

In den Figuren 12 und 13 ist eine weitere Variante des Verbindungskörpers dargestellt, bei dem die Spitze nicht durch den Verbindungskörper selbst, sondern durch einen Mitnehmerstift 29 gebildet ist. Der Mitnehmerstift 29 lässt sich in das Durchgangsloch 30 des Verbindungskörpers 31 einsetzen und durchsetzt diesen bei voller Einführung, wie in Figur 13 dargestellt, so weit, dass der schlanke Konus 32 des Verbindungskörpers 31 weitgehend übergangsfrei in den stumpferen Konus 33 mit der Spitze 33 übergeht. Die Mitnahme des Mitnehmerstiftes 29 erfolgt hier durch den Sechskant 35 am Ende des Mitnehmerstiftes 29, der in eine entsprechende Aufnahme 36 im Bund 37 des Verbindungskörpers 31 passt. Der Antrieb des Verbindungskörpers 31 erfolgt hier wie bei der Gestaltung gemäß Figur 1 über ein Sechskant. Der Mitnehmerstift 29 ist dann besonders vorteilhaft, wenn er über eine hohe Härte verfügt und damit in harte Werkstoffe eindringen kann. Es ist möglich, den Mitnehmerstift 29 nach erfolgter Verschweißung zurückzuziehen und für weitere Reibschweißvorgänge zu verwenden.

## Patentansprüche

1. Reibschweißverbindung von wenigstens einer Platte (1, 2; 24, 25) mit einem Verbindungskörper (3; 31), wobei der Verbindungskörper (3; 31) einen in einer Spitze (10,13, 17, 33) auslaufenden schlanken Konus (5,14,32) aufweist, wobei der Verbindungskörper (3; 31) im Bereich seines Bundes (4, 37) einen Mitnehmer (4) für den Ansatz eines Druck und Rotationswerkzeugs aufweist und die Platte (1, 2; 24, 25) einen aus dieser in Eintreibrichtung herausragenden Durchzug (8) aufweist, der von dem schlanken Konus (5) ausgeformt ist, der längs seiner Innenfläche eine sich auf den Konus (5) erstreckende Reibschweißzone (7) bildet, **dadurch gekennzeichnet, dass** die Reibschweißverbindung wenigstens eine an der ersten Platte (1, 2; 24, 25) anliegende zweite Platte aufweist, so dass die-erste und zweite Platte übereinanderliegen, wobei die zweite Platte einen in Eintreibrichtung durch den, schlanken Konus (5) ausgeformten Durchzug (9) aufweist, wobei die Durchzüge (8, 9) derart geformt sind, dass diese ineinander übergehen und längs ihrer Innenflächen eine sich auf den schlanken Konus (5) erstreckende Reibschweißzone (7) bildet, wobei die Spitze (10,13,17, 33) aus der unteren Platte herausragt und der Bund (4, 37) auf der oberen Platte aufsitzt.

2. Reibschweißverbindung nach Anspruch 1, **dadurch gekennzeichnet, dass** die Spitze (10) von einem gegenüber dem schlanken Konus (5) steileren kurzen Konus (6) gebildet ist.

3. Reibschweißverbindung nach einem der Ansprüche 1 bis 2, **dadurch gekennzeichnet, dass** die Spitze (10) zusätzlich gehärtet ist.

4. Reibschweißverbindung nach einem der Ansprüche 1 bis 3, **dadurch gekennzeichnet, dass** die Spitze (10) mit einem gegenüber dem schlanken Konusmaterial härteren Material überzogen ist.

5. Reibschweißverbindung nach einem der Ansprüche 1 bis 4, **dadurch gekennzeichnet, dass** die Spitze als Ergänzungsstück an dem schlanken Konus angebracht ist.

6. Reibschweißverbindung nach einem der Ansprüche 1 bis 5, **dadurch gekennzeichnet, dass** der schlanke Konus (12) in einen Bolzen (11) übergeht.

7. Reibschweißverbindung nach einem der Ansprüche 1 bis 6, **dadurch gekennzeichnet, dass** der schlanke Konus (14) ein Sackloch (18) aufweist.

8. Reibschweißverbindung nach einem der Ansprüche 1 bis 7, **dadurch gekennzeichnet, dass** der Bund (4) auf seiner der oberen Platte (1) zugewandten Seite (20) eine Hohlkehle (21) aufweist.

9. Reibschweißverbindung nach einem der Ansprüche 1 bis 8, **dadurch gekennzeichnet, dass** die Reibschweißzone (22) sich bis in die der oberen Platte (1) zugewandten Seite des Bundes (4) erstreckt.

10. Reibschweißverbindung nach einem der Ansprüche 1, bis 9, **dadurch gekennzeichnet, dass** der Bund (4) auf seiner der oberen Platte (1) zugewandten Seite mit Heißklebstoff (23) beschichtet ist.

11. Reibschweißverbindung nach einem der Ansprüche 1 bis 10, **dadurch gekennzeichnet, dass** die eine Platte (24) als Verstärkung der anderen Platte (25) ausgebildet ist.

12. Reibschweißverbindung nach einem der Ansprüche 1 bis 11, **dadurch gekennzeichnet, dass** mindestens eine der Platten vorgelocht ist.

13. Reibschweißverbindung nach einem der Ansprüche 2 bis 12, **dadurch gekennzeichnet, dass** der kurze Konus durch einen ein Durchgangsloch im schlanken Konus durchdringenden Mitnehmer gebildet ist, der den schlanken Konus fortsetzt und mit seinem dem kurzen Konus gegenüberliegenden schlanken Konus in eine entsprechende Aufnahme am Bund einpassbar ist.

## Claims

1. Friction-welded connection of at least one plate (1, 2; 24, 25) to a connecting body (3; 31), which connecting body (3; 31) has a slender cone (5, 14, 32) terminating in a tip (10, 13, 17, 33), and, in the area of a collar (4, 37) of the connecting body (3; 31), has a driver member (4) for the application of a pressure and rotary tool, and which plate (1, 2; 24, 25) has a passage (8) that protrudes from the plate in the driving direction and is shaped by said slender cone (5), which passage (8) forms a friction welding zone (7) along its interior surface which extends to said cone (5), **characterized in that** said friction-welded connection has at least a second plate which makes contact with said first plate (1, 2; 24, 25) such that said first and second plates lie on top of each other, said second plate (1, 2; 24, 25) having a passage (9) that protrudes from the second plate in the driving direction and is shaped by said slender cone (5), both passages (8, 9) being formed such that they merge into each other and that a friction-welded zone (7) is formed along their interior surfaces which extends to said slender cone (5), with the tip (10, 13, 17, 33) protruding from the lower plate and said collar (4, 37) resting on the top plate.

2. The friction-welded connection of claim 1, **characterized in that** the tip (10) is formed by a short cone (6) which is steeper than the slender cone (5).

3. The friction-welded connection of claims 1 to 2, **characterized in that** the tip (10) is additionally hardened.

4. The friction-welded connection of claims 1 to 3, **characterized in that** the tip (10) is coated with a material that is harder than the material of the slender cone.

5. The friction-welded connection of claims 1 to 4, **characterized in that** the tip is mounted on the slender cone as an additional piece.

6. The friction-welded connection of claims 1 to 5, **characterized in that** the slender cone (12) merges into a bolt (11).

7. The friction-welded connection of claims 1 to 6, **characterized in that** the slender cone (14) has a blind hole (18).

8. The friction-welded connection of claims 1 to 7, **characterized in that** a fillet (21) is provided on the side (20) of the collar (4) which faces the top plate (1).

9. The friction-welded connection of claims 1 to 8, **characterized in that** the friction-welded zone (22) extends into the side of the collar (4) which faces the top plate (1).

10. The friction-welded connection of claims 1 to 9, **characterized in that** the side of collar (4) which faces the top plate (1) is coated with hot-melt adhesive (23).

11. The friction-welded connection of claims 1 to 10, **characterized in that** the one plate (24) is provided as a reinforcement of the other plate (25).

12. The friction-welded connection of claims 1 to 11, **characterized in that** at least one of said plates is pre-punched.

13. The friction-welded connection of claims 2 to 12, **characterized in that** the short cone is formed by a driver member which penetrates a through hole within the slender cone and thus extends the latter, with the driver member's slender cone which is situated opposite the short cone being capable of being fitted into a suitable receiving opening provided on the collar.

## Revendications

1. Assemblage par soudage par friction d'au moins une plaque (1, 2 ; 24, 25) avec un corps de liaison (3 ; 31), le corps de liaison (3 ; 31) présentant un cône mince (5, 14, 32) s'échappant d'une pointe (10, 13, 17, 33), le corps de liaison (3 ; 31) présentant dans la zone de sa collerette (4, 37) un entraîneur (4) pour l'appui d'un outil de pression et de rotation et la plaque (1, 2 ; 24, 25) présentant un passage (8) qui, émergeant de cette dernière dans la direction d'enfoncement, est formé par le cône mince (5) formant le long de sa surface interne une zone de soudage par friction (7) qui s'étend sur le cône (5), **caractérisé en ce que** le soudage par friction présente au moins une deuxième plaque touchant à la première plaque (1, 2 ; 24, 25) de sorte que la première et la deuxième plaque soient superposées, la deuxième plaque présentant un passage (9) formé par le cône (5) dans la direction d'enfoncement, les passages (8, 9) étant formés de forme qu'ils s'emboîtent l'un dans l'autre en formant le long de leur surface interne une zone de soudage par friction (7) s'étendant sur le cône mince (5), la pointe (10, 13, 17, 33) émergeant de la plaque inférieure et la collerette (4, 37) reposant sur la plaque supérieure.

2. Assemblage par soudage par friction selon la revendication 1, **caractérisé en ce que** la pointe (10) est formée par un cône court (6) plus prononcé que le cône mince (5).

3. Assemblage par soudage par friction selon l'une des revendications 1 à 2, **caractérisé en ce que** la pointe (10) est ultérieurement trempée.

4. Assemblage par soudage par friction selon l'une des revendications 1 à 3, **caractérisé en ce que** la pointe (10) est enveloppée d'un matériau plus dur que le matériau de cône mince.

5. Assemblage par soudage par friction selon l'une des revendications 1 à 4, **caractérisé en ce que** la pointe est un accessoire monté sur le cône mince.

6. Assemblage par soudage par friction selon l'une des revendications 1 à 5, **caractérisé en ce que** le cône mince (12) traverse un boulon (11).

7. Assemblage par soudage par friction selon l'une des revendications 1 à 6, **caractérisé en ce que** le cône mince (14) présente un trou borgne (18).

8. Assemblage par soudage par friction selon l'une des revendications 1 à 7, **caractérisé en ce que** la collerette (4) présente une encoche (21) sur sa face (20) orientée vers la plaque supérieure (1).

9. Assemblage par soudage par friction selon l'une des revendications 1 à 8, **caractérisé en ce que** la zone de soudage par friction (22) s'étend jusque dans la face de la collerette (4) orientée vers la plaque supérieure (1).

10. Assemblage par soudage par friction selon l'une des revendications 1 à 9, **caractérisé en ce que** la collerette (4) est recouverte d'adhésif à chaud (23) sur sa face orientée vers la plaque supérieure (1).

11. Assemblage par soudage par friction selon l'une des revendications 1 à 10, **caractérisé en ce que** ladite plaque (24) est configurée pour renforcer l'autre plaque (25).

12. Assemblage par soudage par friction selon l'une des revendications 1 à 11, **caractérisé en ce qu'**au moins une des plaques est trouvée.

13. Assemblage par soudage par friction selon l'une des revendications 2 à 12, **caractérisé en ce que** le cône court est formée par un entraîneur pénétrant dans un trou de passage du cône mince, poursuivant le cône mince et pouvant être ajusté avec son cône mince opposé au cône court dans un logement correspondant situé sur la collerette.
